# EUROPEAN PATENT APPLICATION

(11) **EP 4 324 561 A1**
(43) Date of publication of application: **21.02.2024**
(21) Application number: 22190699.3
(22) Date of filing: 17.08.2022
(51) Int. Cl.: B01J 37/20, B01J 8/04, C10G 45/02, C10G 45/32, C10G 45/72

(54) **PROCESS PLANT WITH FLEXIBLE HEAT INTEGRATION SCHEME**

(71) Applicant: Topsoe A/S, 2800 Kgs. Lyngby (DK)
(72) Inventor: Tensingh, Ashwin Singh, 2920 Charlottenlund (DK); Mahajan, Hemant Jagannath, 2980 Kokkedal (DK)
(74) Representative: Topsoe A/S

(57) **Abstract**

A thermal configuration for use during sulfidation and operation is disclosed which may involve multiple of the following heating steps, (a) heating a process feed by a charge heater, heating (b) a process feed stream or a recycle oil stream by heat exchange with a process effluent, heating (c) a process feed stream or a recycle oil stream by heat exchange with a said process feed after having been heated in the charge heater. Furthermore, the steps may be made independent by controlling the ratio of the streams directed to (b) or (c), controlling an amount of feed stream or recycle oil stream by-passed around the heating of (b) or (c) and controlling the temperature of step (a).

## Description

### [Technical Field

The present invention relates to a method for controlling process temperatures during catalyst activation as well as during operation, with consideration of efficient capital and operational expenses.

### Background Art

The activation of base metal catalysts by sulfidation is an important factor in the performance of hydroprocessing processes and efficient sulfidation processes are also a relevant aspect of the cost. The use of ex-situ pre-sulfided catalyst is an option, but this is related to an extra cost, and especially in processes with short catalyst cycles it is desirable to practice in-situ sulfidation.

Furthermore, it is critical to control the temperature for optimal activation of the catalysts, and therefore a configuration supporting optimal thermal profiles during sulfidation is also important.

### Summary of Invention

The present invention proposes optimizing sulfidation by employing a charge heater, possibly a fired heater or an electrical heater and recuperating the heat by heat exchange with an upstream flow. To optimize the thermal conditions further, the charge heater may heat a stream above the required temperature, and transferring this excess heat to another process stream by heat exchange, which enables detailed control of temperatures such that all reactors receive sulfidation medium at an optimal temperature.

In addition, it is proposed to provide means for controlling the flow, such that an upstream reactor may be converted to a downstream reactor during sulfidation, which minimizes the excess heating required when in-situ sulfidation is chosen.

Finally a process scheme is proposed for optimizing thermal profiles further, enabling cost effective operation.

### Definitions

The terms start of run (SOR), mid of run (MOR) and end of run (EOR) refer to the design conditions (mainly temperatures and reaction yields, but in principle all conditions) for a reactor loaded with fresh catalyst (SOR), for a reactor at the end of guaranteed operation (EOR) and for a reactor in between these points in time (MOR). Typically design temperatures will be higher at EOR than at SOR, since the catalyst activity is expected to fall.

The term activation by sulfidation of a catalyst shall, unless otherwise indicated, be understood as the process of converting nickel, cobalt, molybdenum and tungsten to metal sulfide form. Prior to activation by sulfidation the base metals may be in oxide form or in elemental form. Activation may typically involve contacting the catalyst with a liquid or gas comprising sulfur, such as sulfide containing hydrocarbons, dimethyl disulfide (DMDS) and other H₂S precursors, and having an elevated temperature, and commonly an amount of hydrogen will also be present to support the formation of metal sulfides. Sulfidation shall not imply an absolute percentage of metals in sulfide form but implies an amount of sulfide sufficient for commercial operation.

The terms process operation, conversion and production shall unless otherwise indicated imply that a feedstock is directed to the process with the objective of carrying out a chemical conversion of the feedstock to form a product with different properties, such as a hydrocarbonaceous feedstock, including an oxygenate feedstock originating from biological sources or thermal decomposition, being converted to a hydrocarbon more suited for use as a transportation fuel or a raw material for subsequent processing.

A heat exchanger shall be construed as a piece of equipment in which thermal energy in one stream is transferred to a second stream, where the two streams are physically separated in the heat exchanger. The stream having the highest inlet temperature is designated at the "hot side" and the stream receiving the thermal energy is designated the "cold side" of the heat exchanger.

A material catalytically active in a chemical reaction such as hydrodeoxygenation or hydrocracking shall be understood as a material having significant catalytic activity and preference for said chemical reaction under the conditions used. As it will be realized by the skilled person, most reactions will show an amount of side reactions, but unless otherwise specified the term a material catalytically active in a chemical reaction shall be understood as a combination of a material and conditions under which a commercially relevant amount of conversion takes place with higher selectivity than any other chemical reaction.

### Technical Problem

Hydroprocessing of reactive feedstocks is commonly carried out in three steps; a diolefin saturation reactor, operating at 100-190°C, with a temperature increase of 10-50°C. This reactor is followed by a guard reactor, capturing impurities at a temperature around 250--300°C, followed by charge heating to about 300-400°C to enable exothermic hydroprocessing of the purified feedstock, with an effluent temperature around 300-350°C, where all temperatures are illustrative examples of start of run temperatures for fresh catalyst, but at end of run, the catalyst will be deactivated such that the required temperatures may be 50-90°C higher. Commonly all catalysts in a process are deactivated at similar rates, and processes are designed under this assumption, allowing for simple thermal control, increasing the temperature in a single position, which will compensate for reduced activity in a correlated way for all reactors. However, if one reactor is deactivated at a different rate from others, the required temperature compensation will be uncorrelated, and thus independent thermal control, is preferred in order to optimize catalyst lifetime.

The catalyst used in the three steps mentioned above are commonly all sulfided base metal catalysts, which must be activated by sulfidation prior to operation. Sulfidation may be carried out ex-situ, which provides a ready to use catalyst, at elevated cost, or in-situ, which requires proper activation conditions in the process plant.

In-situ sulfidation of hydroprocessing catalyst is preferably carried out at rather narrow temperature range such as 300-350°C or even 310-330°C, to maximize sulfidation quality and minimize the time required for sulfidation. For exothermic processes the required process inlet temperature in initial stages is much lower, possibly 100-180°C, and the released process heat provides sufficient temperatures for reaction downstream, such that an initial charge heater may not be provided in consideration of routine operation. To enable such processes, it is necessary to load pre-sulfided catalysts in some of the reactors or alternatively provide heaters to heat the pre-sulfidation medium in multiple positions.

### Solution to Problem

The present invention discloses a process layout and a process, in which in-situ activation is enabled, while the heat exchange duty is minimized, while ensuring optimal temperatures in all the reactors.

The sulfidation of catalysts is substantially adiabatic, so a process plant designed without heating of the feedstock, e.g. for operation of exothermic processes may not be suited for in-situ sulfidation, since sufficient heat will not be available.

By providing means for controlling the flow, such that an upstream reactor, e.g. the diolefin hydrogenation reactor mentioned above, intended to operate at low temperature is by-passed, directing flows for heat exchange with hot process streams and directing a hot process stream to the diolefin hydrogenation reactor, a process scheme may be designed which efficiently may sulfidate catalyst at a moderate capital cost as well as moderate operational cost.

Similarly, the situation of non-correlated deactivation of catalysts may also be handled by non-correlated thermal control, where control of flows may be beneficial in that it will be less costly than adding independent charge heaters.

In general terms a thermal configuration according to the present invention may involve multiple of the following heating steps, (a) heating a process feed by a charge heater, heating (b) a process feed stream or a recycle oil stream by heat exchange with a process effluent, heating (c) a process feed stream or a recycle oil stream by heat exchange with a said process feed after having been heated in the charge heater. Furthermore, the steps may be made independent by controlling the ratio of the streams directed to (b) or (c), controlling an amount of feed stream or recycle oil stream by-passed around the heating of (b) or (c) and controlling the temperature of step (a). The thermal configuration may be implemented during activation by sulfidation or during process conversion.

### Detailed description

Catalytically active materials comprising base metals as active materials; molybdenum, tungsten, nickel or cobalt are most commonly used in their sulfided form during hydroprocessing. As the materials are produced in elemental or oxide form, they must be activated by conversion into sulfided form, which requires contact with a sulfur rich material at a temperature sufficient for sulfidation of the metals.

In practice this may be carried out by directing a sulfidation medium, typically a gas/liquid mixed phase stream, which may contain a gas phase with hydrogen and a sulfur compound and a liquid phase which may be a fossil feedstock inherently comprising sulfur or a sulfur free feedstock, which may be a fossil hydrocarbon or a hydrocarbon of renewable origin. Especially if the catalyst has high activity, it may be beneficial to use a hydrotreated hydrocarbon, to minimize the risk of hydrogen depletion and/or thermal runaway and a related coking of the catalyst. If the liquid phase is absent of sulfur, the liquid or the gas may be provided with addition of a sulfur additive, such as dimethyl disulfide - DMDS or other H₂S precursors. Depending on the availability and the specific catalyst different sulfur compounds are used for sulfidation, and the composition of the sulfur free feedstock as well as the additive may be chosen to achieve active and stable catalysts, with little process downtime and a minimal cost of reagents and energy.

One possible solution is to sulfidate the catalyst ex-situ and supply it to the reactor in pre-sulfided form. This ex-situ sulfidation has the benefit of well-defined sulfidation conditions and of minimizing downtime but is related to an increased cost of the catalyst, and is therefore not attractive.

An alternative solution involves in-situ sulfidation in the process plant, as designed for operation, typically with recycle of the sulfidation medium until a significant concentration of sulfur is observed in the effluent. This is common practice, especially for processes with charge heating and little heat development during the process, since this will correspond to the thermal profile of the sulfidation process, and thus pre-heating of the feedstock will be required, just like pre-heating of the sulfidation medium. If the thermal profile is sufficiently similar it may be possible to allow for a moderate change it the heating duty. Furthermore, to minimize the consumption of sulfidation medium is commonly recycled, which is typically done separately for the gas phase and the liquid phase.

For highly exothermal processes, the heat release is higher during hydroprocessing than during sulfidation, and therefore process heaters may not be provided as a necessity of the process. In this case it is either required to provide pre-sulfided catalysts for some reactors not equipped with sufficient pre-heating, or alternatively provide process heating for use during sulfidation, which must stand idle during operation. Both of these solutions are expensive, and therefore an alternative is desired.

By designing an existing charge heater to provide a moderate amount of excess heat to a feed stream and distributing this heat in the process, it may be possible to efficiently provide the required heat during sulfidation. This may be done by providing heat exchange cooling the feed stream and heating other streams.

By equipping the process plant with means of flow control, such as valves and pipe, such that an upstream reactor operating at low inlet temperature during hydroprocessing is temporarily receiving heated sulfidation medium in series or parallel with other reactors, even such a low inlet temperature reactor may undergo cost-effective in-situ sulfidation without requiring an extra charge heater.

In this manner it is possible to provide slightly excessive heating, which by thermal losses is released from the process. The effluent stream may also be used to heat the sulfidation medium by heat exchange prior to contacting any catalysts.

Furthermore, it may also be preferred to recycle an amount of effluent sulfidation medium, at an elevated temperature during sulfidation, whereas during hydroprocessing operation, it may be preferred to cool such a recycle oil stream to control the heat release.

The process layout may also involve splitting the feed stream and if recycle is practiced the recycle oil stream in one amount undergoing heat exchange with a stream heated by a charge heater, either fire heated, heated electrically or possibly heated by a hot process stream and another amount heated by the process effluent, and combining the two recycle oil streams after heating. Depending on the specific reactions, the two streams will differ in temperature, and by controlling the amounts heated in each position, a more flexible control of temperature may be obtained. Such a scheme involving split feed and/or recycle streams, which are heated in two different positions to two different temperatures may be beneficial, and especially providing excess heat in the process heater which is transferred to this feed and/or recycle stream by heat exchange with the stream heated in the process heater may be beneficial, during sulfidation processes but also during hydroprocessing operation, irrespective of the thermal profile used during sulfidation.

Thermal flexibility of operation may also be required during operation of a process. It may be desired to produce different products, requiring different process temperatures, e.g. to control the selectivity between hydrocracking and isomerization. It may also relate to feedstocks of different reactivity, and finally at start of run and end of run different temperatures may be required. In such operation, where cost effective and flexible thermal control of the process is desired, the process may be configured for optionally combining a feed stream with a recycle oil stream and directing the stream to a main reaction, where the effluent of the main reaction is directed to the hot side of a second heat exchange with an amount of the feed stream, the recycle oil stream or a combined stream on the cold side. A further controllable amount of the feed stream, the recycle oil stream or a combined stream may be directed to the cold side of a first heat exchange with the feed stream to the main reaction on the hot side. The feed stream to the main reactor may be heated in a charge heater prior to the second heat exchange with the recycle oil stream, and this charge heater may be designed to provide excess heat, providing an excess heat for heating the further amount of the feed stream, the recycle oil stream or the combined stream in the first heat exchanger. If desired, the feed stream may be reacted in one or more pretreatment steps, either before or after being combined with one or both amounts of recycle oil stream, and before or after being heated by the heat exchange with the main reaction effluent. The process may also be configured for allowing a controllable amount of feed stream or pre-treated feed stream to by-pass the first heat exchanger. The charge heater may provide a controllable amount of heat to the feed stream, but the feed stream may also be heated by an exothermal intermediate process step.

By varying one or more of the controllable amount of the first feed stream, the recycle oil stream or a combined stream and the controllable amount of the second feed stream, the recycle oil stream or a combined stream, the controllable amount of by-pass and the controllable amount of heat in the charge heater a high flexibility of temperatures in the process reactors are established, and therefore such a process will provide high flexibility in thermal control of processes. This may include processes with hydrotreatment pre-treatment and hydroprocessing, including hydrotreatment, isomerization and hydrocracking as the main reaction, but also other processes.

### Brief Description of Drawings

Fig.1 shows a process layout for hydrotreatment in three reactors.
Fig.2 shows a process layout for hydrotreatment in three reactors, with flows configured for sulfidation of all three reactors.

### Fig.1

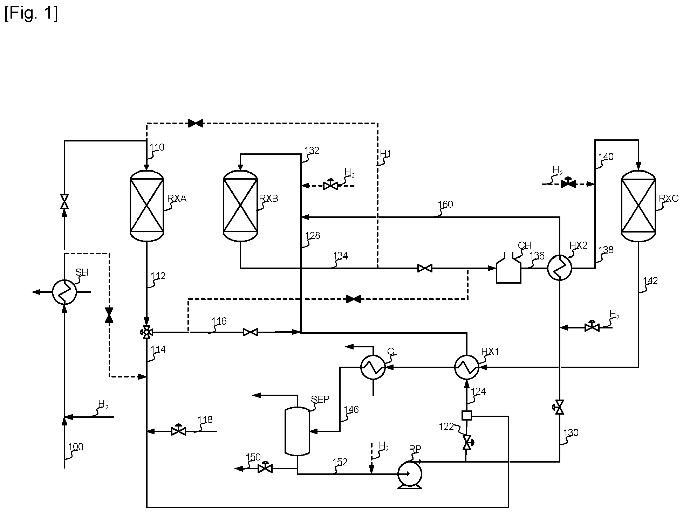

Fig.1 shows a process layout for hydrotreatment in three reactors. In the figure solid process lines indicate lines in flow, and dashed process lines indicates lines blocked from flow. Temperatures and reactions mentioned correspond to start of run temperatures for a process for hydrotreatment of pyrolysis oil originating from thermal decomposition of plastic waste, but as these are exemplary, the conditions may be different in other similar processes and shall not be construed as limiting for claim scope.

A feedstock (100), such as a pyrolysis oil originating from thermal decomposition of plastic waste, is directed to the process, combined with a hydrogen rich gas (H₂) and heated e.g. by steam (SH), and directed further as initial reactor feed (110) through an open valve to an initial reactor (RXA), selectively hydrogenating diolefins at a temperature around 180°C. The outlet (112) of the initial reactor (RXA) is directed to a three-way mixing valve providing a main stream (114) and a by-pass stream (116), such that the main stream (114) is combined with recycle gas (118) and a first stream of recycle oil (122), providing a combined main stream (124), which is preheated by heat exchange in a first heat exchanger (HX1) and combined with the by-pass stream (116) to form a first intermediate reactor feed stream (128). By increasing the amount of the by-pass stream (116), less heating in the first heat exchanger (HX1) takes place, which enables control of the temperature of the first intermediate reactor feed stream.

A second recycle oil stream (130) along with recycle hydrogen is directed to be preheated by heat exchange with a heated charge stream (136) in a second heat exchanger (HX2), and this second intermediate reactor feed stream (160) is combined with the first intermediate reactor feed stream (128) to provide an entire intermediate reactor feed stream (132). Controlling the flow of the second recycle oil stream (130) and the temperature of the heated charge (136) enables control of the temperature of the entire intermediate reactor feed stream (132).

The entire intermediate reactor feed stream (132) is directed to an intermediate reactor (RXB) to contact a catalyst, e.g. a contaminant guard material, at a temperature of 280°C. This temperature is sufficient to release metallic heteroatoms from the entire intermediate reactor feed stream (132), such that heteroatoms are released and bound on the surface of the contaminant guard material in the intermediate reactor. The process may be moderately exothermal, and the temperature of the intermediate reactor outlet stream (134) may be around 318°C. To support hydrotreatment of the intermediate reactor outlet stream (134) , it is may be preferred to increase the temperature to provide a heated charge stream (136), which is carried out in a charge heater (CH), which may be a fired heater, an electrical heater or heat exchange with a high temperature process stream. The heated charge stream (136) is directed to the second heat exchanger (HX2), with the second stream of recycle oil (130) on the cold side. Commonly the second stream of recycle oil (130) is zero, but if a heating boost is required either temporarily or permanently, excessive heating in the charge heater (CH) may be used to heat the second recycle oil (130).

The hot side outlet stream (138) of the second heat exchanger (HX2) is directed to the inlet of the main reactor (RXC). Here the temperature is around 343°C, allowing for efficient hydrotreatment, with only a minor temperature increase of around 5°C, but depending on the nature of the feedstock, this temperature increase may be higher. The main reactor effluent (142) is cooled in the first heat exchanger (HX1), and here in a further cooler (C) and directed to gas/liquid separation (SEP) and withdrawn as product stream (150) optionally for further processing, and an amount of this main reactor effluent stream is directed to a recycle pump (RP) as recycle oil stream (152) in the present example.

The process shown will enable independent control of the three reactors, since the thermal energy in the stream heater (SH) will influence the initial reactor (RXA), the thermal energy in the charge heater (CH) will influence the main reactor (RXC) and the intermediate reactor (RXB), an increased amount of the by-pass stream (116) will by-pass the first heat exchanger (HX1), and thus cool the intermediate reactor (RXB) and the ratio between the two recycle oil streams (122 and 130) will control the temperature the feed to the intermediate reactor (RXB).

### Fig.2

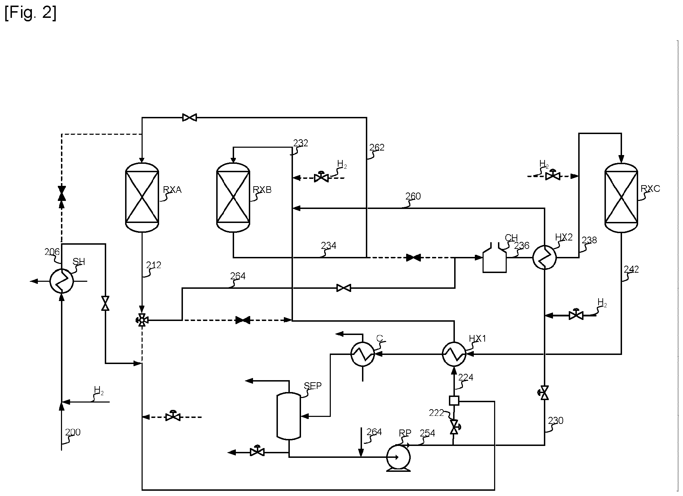

Fig.2 shows the same process layout as Fig.1, but with the flows configured for sulfidation of the reactors. In the figure solid process lines indicate lines in flow, and dashed process lines indicates lines blocked from flow.

A sulfidation medium (200), such as a hydrotreated oil, is directed to the process and heated by steam (SH), and directed as sulfidation medium (206) further through an open valve to a mixer, such that it is combined with a first stream of recycle oil (222), providing a combined main stream (224), which is preheated by heat exchange in a first heat exchanger (HX1).

A second amount of recycle oil (230) is directed to be preheated by heat exchange with a heated charge in a second heat exchanger (HX2), and added to the first intermediate reactor feed stream (232) to provide an entire intermediate reactor feed stream (232). Controlling the flow of this stream and the temperature of the heated charge enables control of the temperature of the entire intermediate reactor feed stream (232). For sulfidation this stream is preheated to 317°C, and the entire intermediate reactor feed stream (232) may be 313°C, which is optimal for sulfidation.

The entire intermediate reactor feed stream (232) is directed to the intermediate reactor (RXB) to contact a catalyst, e.g. a contaminant guard material, at a temperature of 313°C. This temperature is sufficient to enable efficient and deep sulfidation of the catalyst in the intermediate reactor (RXB). The outlet stream (234) of the intermediate reactor (RXB) is then directed through an initial reactor sulfidation line (262) to the initial reactor (RXA), and the outlet stream (212) of the initial reactor (RXA) is directed through an intermediate reactor by-pass line (264) to the charge heater (CH).

The heated charge stream (236) is directed to the second heat exchanger (HX2), with the second stream of recycle oil (230) on the cold side. For sulfidation, the second stream of recycle oil (230) is preferably 25-50% of the total recycle oil stream (254) to ensure sufficient temperature in the intermediate and the initial reactors (RXB and RXA).

The hot side outlet stream (238) of the second heat exchanger (HX2) is directed to the inlet of the main reactor (RXC). Here the temperature is around 329°C, which is at the upper end of recommended sulfidation conditions, allowing for efficient sulfidation. The main reactor effluent (242) is cooled in the first heat exchanger (HX1) and directed to gas/liquid separation (SEP) and a major amount of this main reactor effluent stream is directed to a recycle pump (RP) as recycle oil stream (252). During sulfidation hydrogen make-up gas is provided in multiple positions (H₂) and sulfur compounds (264) are also added to the process, e.g. prior to the recycle pump (RP), until sulfidation is complete.

### Description of Embodiments

A first aspect of the present disclosure relates to a process for activating a first catalyst and a second catalyst by sulfidation, comprising the steps of
- directing a first amount of a sulfidation medium to a primary side of a first heat exchange, to provide a first amount of heated sulfidation medium having a first temperature,
- directing a second amount of sulfidation medium to a to a primary side of second heat exchange, to provide a second amount of heated sulfidation medium having a second temperature,
- combining said first heated sulfidation medium and said second heated sulfidation medium to contact a first material in a first reactor, and withdrawing an intermediate sulfidation medium from said first reactor,
- directing the intermediate sulfidation medium to be heated by a heat source providing an amount of heat, to provide a heated intermediate sulfidation medium,
- directing said heated intermediate sulfidation medium to a primary side of second heat exchange, to provide an adjusted heated intermediate sulfidation medium having a third temperature,
- directing said adjusted intermediate sulfidation medium to contact a second material in a second reactor, and withdrawing an effluent from said second reactor,
- directing the effluent by to a secondary side of said second heat exchange to provide a cooled effluent,
   wherein the ratio between the first amount of heated sulfidation medium and second amount of heated sulfidation medium and the amount of heat provided by the second heat source are controllable.

This has the benefit of providing a process for activating base metal catalysts by in-situ sulfidation, even if process operation conditions involve an exothermal process step in the first reactor such that an upstream process heater is not required during operation and thus not available during sulfidation.

A second aspect relates to a process according to the first aspect wherein said second heat source is from a fired heater, an electrical heater or a heat exchange with a process stream.

This has the associated benefit of providing sulfidation process heat from an external source.

A third aspect relates to a process according to any aspect above, wherein a recycled amount of said cooled effluent or a downstream stream originating from said cooled effluent is added to one or more of the sulfidation medium, the first amount of heated sulfidation medium and the second amount of heated sulfidation medium.

This has the associated benefit of reducing the consumption of sulfidation media. Beneficially the recycled sulfidation medium may have a sulfide compound added to support sulfidation, as a function of the concentration of sulfur in the recycled sulfidation medium.

A fourth aspect relates to a process according to any aspect above, wherein a third amount of the sulfidation medium is combined with the first amount of heated sulfidation medium and the second amount of heated sulfidation medium.

This has the associated benefit of providing a means for limiting the temperature by addition of an amount of unheated sulfidation medium and thus providing a further independent control of process temperature.

A fifth aspect relates to a process according to any aspect above in which a third catalyst is present in a third reactor, and an amount of one of the sulfidation medium, the first amount of heated sulfidation medium, the second amount of heated sulfidation medium, the intermediate sulfidation medium, the heated intermediate sulfidation medium and the effluent is directed to contact said third material in said third reactor.

This has the associated benefit of providing activation of a third catalyst, by directing hot sulfidation medium to the third catalyst, for what would be a downstream position during operation.

A sixth aspect relates to a process according to any of the first four aspects above in which a third catalyst is present in a third reactor and in which the third catalyst is pre-sulfided ex-situ and wherein less than 10%, such as none, of the sulfidation medium is directed to said third reactor during sulfidation.

This has the associated benefit of providing a process where a controlled flow heat integration scheme is only provided in part of the process.

A seventh aspect relates to a process for hydroprocessing a feedstock comprising the sulfidation process according to any aspect above followed by a hydroprocessing process for hydroprocessing the feedstock carried out subsequently in the same process plant, wherein the temperature at the inlet of the first reactor is at least 30°C or 50°C below the temperature at the inlet of the second reactor.

This has the associated benefit of providing a process for activation by sulfidation in a process layout which is designed for an exothermal process, and thus does not have feedstock heater with sufficient capacity for heating a sulfidation medium.

An eighth aspect relates to a process for hydroprocessing according to the seventh aspect in combination with the fourth or fifth aspect, wherein means of flow control are configured to allow a flow sequence of the reactors during sulfidation which if different from the flow sequence of the reactors during hydroprocessing.

This has the associated benefit of providing a process for activating a catalyst by sulfidation, even though the catalyst would have a very low temperature without such a scheme of reconfiguring the flows sequence.

A ninth aspect relates to a process according to any aspect above where during hydroprocessing said first catalyst is operating under active guard conditions and where said second catalyst is operating under active hydroprocessing conditions and if present, said third catalyst is operating under active diolefin saturation conditions, and said feedstock comprises a renewable material comprising oxygenates and/or a product of thermal decomposition of a solid feedstock, such as plastic, municipal waste or biological materials.

This has the associated benefit of providing a suitable process for activation by in-situ sulfidation and subsequent operation. As the cycle length of such processes is short, the savings from inexpensive in-situ activation are occurring more often and thus are more valuable.

A tenth aspect relates to a process for operating a first catalyst and a second catalyst, comprising the steps of
activating the catalysts by sulfidation by
   directing a sulfidation medium to be heated by a first heat exchange, to provide a heated sulfidation medium having a sulfidation temperature,
   directing said heated sulfidation medium in combination with a first recycle oil stream to contact a first material in a first reactor, and withdrawing an intermediate sulfidation medium from said first reactor,
   directing the intermediate sulfidation medium to be heated by a second heat exchange, to provide a heated intermediate sulfidation medium,
   directing said heated intermediate sulfidation medium to contact a second material in a second reactor, and withdrawing an effluent from said second reactor,
   cooling the effluent by said first heat exchange to provide a cooled effluent,
   directing at least an amount of said cooled effluent or a downstream stream originating from said cooled effluent as said first recycle oil stream
   and after activating the materials by sulfidation to be active catalysts,
hydrotreating a feedstock by
   directing said feedstock, optionally in combination with a first recycle oil stream, to contact said first catalyst in said first reactor at a first reactor inlet temperature to provide a pretreated product stream having a pretreated product temperature,
   directing said pretreated product stream to be heated by said first heat exchange to provide a heated pretreated product stream,
   directing said heated pretreated product stream to contact said second catalyst in said second reactor at a second reactor inlet temperature,
   cooling the effluent of said second reactor by said first heat exchange, to provide a cooled effluent
   directing at least an amount of said cooled effluent as said first recycle oil stream
   characterized in, during hydrotreating, the second reactor inlet temperature being at least 30°C or 50°C above the first reactor inlet temperature.

This has the associated benefit of providing a combined process for activating catalysts and carrying out conversion in a process employing inexpensive process equipment while enabling efficient and flexible thermal control.

An eleventh aspect relates to a process for thermal control of a chemical process plant with two reaction steps comprising the following process steps:
a. providing a process feed stream, and splitting this stream in a first feed stream having the mass flow m1 and a second feed stream having the mass flow m2,
b. heat exchanging the first feed stream as primary stream in a first heat exchanger, to provide a first heat exchanged feed stream,
c. heating the second feed stream as primary stream in a second heat exchanger, to provide a second heat exchanged feed stream,
d. combining the first heat exchanged feed stream and the second heat exchanged feed stream and directing this combined heat exchanged feed stream to a first reactor, to provide at the outlet of this first reactor an intermediate process stream,
e. directing the intermediate process stream to a charge heat exchanger having a heat exchange duty, to provide a first heat exchanged intermediate process stream,
f. directing the first heat exchanged intermediate process stream as secondary stream to said first heat exchanger, to provide a second heat exchanged intermediate process stream,
g. directing the second heat exchanged intermediate process stream to a second reactor, to provide at the outlet of this second reactor an effluent stream,
h. directing the effluent stream as secondary stream to said second heat exchanger to provide a heat exchanged effluent stream,
i. wherein the ratio between mass flow m1 and mass flow m2 is controllable, and wherein the heat exchange duty of the charge heat exchanger is controllable.

This has the associated benefit of providing a process with highly flexible thermal profile with only a single charge heater.

A twelfth aspect relates to a process according to the eleventh aspect above where a further third feed stream having the mass flow m3 is split from said feed stream, and wherein the third feed stream is directed to the first reactor together with said the first heat exchanged feed stream and the second heat exchanged feed stream.

This has the associated benefit of providing an additional independent controllable parameter for additional thermal flexibility by addition of the unheated third stream.

A thirteenth aspect relates to a process plant comprising
a feedstock inlet and a product outlet,
a first reactor comprising a catalyst and having an inlet and an outlet and
a second reactor comprising a catalyst and having an inlet and an outlet,
a first means of heat exchange having a cold side inlet, a cold side outlet, a hot side inlet and a hot side outlet,
a second means of heat exchange having a cold side inlet, a cold side outlet, a hot side inlet and a hot side outlet,
a means of heating having an inlet and an outlet,
a first means of flow control having one inlet and two independently controllable outlets, in fluid communication with the cold side inlets of the first means of heat exchange and the second means of heat exchange respectively,
wherein the feedstock inlet is in fluid communication with the inlet of means of flow control,
wherein the cold side outlet of the first means of heat exchange and the cold side outlet of the second means of heat exchange are in fluid communication with the inlet of the first reactor,
wherein the outlet of the first reactor is in fluid communication with the inlet of the means of heating,
the outlet of the means of heating is in fluid communication with the hot side inlet of the second means of heat exchange,
the hot side outlet of the second means of heat exchange, is in fluid communication with the inlet of the second reactor,
and the outlet of the second reactor is in fluid communication with the hot side inlet of the first means of heat exchange
and the hot side outlet of the first means of heat exchange is in fluid communication with the product outlet.

This has the associated benefit of providing a process plant comprising only a single means of heating, while having a high thermal flexibility.

A fourteenth aspect relates to a process according to the thirteenth aspect above wherein said means of flow control comprises a further third controllable outlet, in fluid communication with the inlet of said first reactor.

This has the associated benefit of providing a by-pass configuration providing a further flexibility in the thermal profile.

A fifteenth aspect relates to a process plant according to the thirteenth or fourteenth aspect above further comprising a third reactor having an inlet and an outlet,
a second means of flow control, configurable for either configuration (a) providing fluid communication between the feedstock inlet and the inlet of the third reactor while providing fluid communication between the outlet of the third reactor and the inlet of the second means of flow control, or
configuration (b) for providing fluid communication between one of the outlet of the second reactor, the outlet of the means of heating and the hot side outlet of the second means of heat exchange and the inlet of the third reactor, while providing fluid communication between the outlet of the second reactor and the product outlet.

This has the associated benefit of providing the option of an upstream reactor which may be activated by in-situ sulfidation even though it is not equipped with an upstream charge heater.

### Examples

Table 1 shows temperatures and flows for two examples of sulfidation activation under different thermal operation schemes.

Example 1-A shows a process according to Figure 2, where the split recycle oil stream (with 67% flowing in line 222 and 33% flowing in line 230, and correspondingly to the first heat exchanger and the second heat exchanger) and the charge heater temperature are optimized to achieve similar temperatures in all three reactors. Here it is seen that to provide sufficient heat for the sulfidation of the hydrotreating reactor catalyst and the guard catalyst, the charge heater must heat the feed stream to 346°C, but that an amount of this heat is transferred to stream 260, which by mixing with with stream 228 heats the feed to the guard reactor. In this manner the guard reactor catalyst may be sulfidated at 313°C and the hydrotreating reactor at 329°C, i.e. within a range of only 16°C.

Example 1-B shows a similar process, where the second recycle oil stream is set to zero, i.e. demonstrating the effect of omitting the second heat exchanger. Here the feed to the guard reactor is only heated by the effluent of the hydrotreatment reactor. Since the same energy must be transferred to the streams, the charge heater must again heat the hydrotreatment feed stream to 345°C feed to to heat the feed to the guard reactor to 311°C. This would result in sulfidation at the elevated temperature 345°C, but at the cost of catalyst life time or activity, i.e. within a wider range of 34°C.

Table 2 shows a second example illustrates the value of the two heat exchangers and the flexible flow configuration during hydrotreatment.

In this example, the feed and conditions for the diolefin hydrogenation reactor and the guard reactor result in a catalyst life time (cycle length), which is only half of the life time for the hydrotreatment catalyst. This means that over the time span where conditions for the diolefin hydrogenation catalyst and the guard catalyst change from minimum to maximum temperature, the hydrotreatment catalyst only change from minimum to intermediate temperature. In the following similar time span, the conditions for the diolefin hydrogenation catalyst and the guard catalyst will again change from minimum to maximum temperature, while the hydrotreatment catalyst conditions change from intermediate to maximum temperature.

A process layout enabling such a thermal profile could be handled by two expensive independent charge heaters, but a lower capital cost will be possible by including two heat exchangers and means of controlling relative flow volumes to the heat exchangers.

Table 2 shows the effect of such a scheme, in that Example 2-S corresponds to Fig.1, at start of run, Example 2-M corresponds to Fig.1 at mid of run and Example 2-E corresponds to Fig.1 at end of run. It can be seen that at start of run, 75% of the diolefin hydrogenation reactor effluent (112) by-passes the first heat exchanger via line 116, such that only a minor amount of this stream is heated by the hydrotreatment reactor effluent (142) in the first heat exchanger. Furthermore, the second heat exchanger is idle, and no guard reactor feed is present in stream 130.

Example 2-M relates to middle run, when the diolefin hydrogenation catalyst and the guard catalyst, are at their end of cycle, the hydrotreatment catalyst will be "mid-cycle". This requires high temperatures for operation of the diolefin hydrogenation catalyst and the guard catalyst, while the hydrotreatment catalyst is operated at intermediate temperature. This may be achieved by having no by-pass in line 116, 25% of the recycle oil directed to be heated in the second heat exchanger and providing extra heat in the charge heater. As a result, the diolefin hydrogenation catalyst and the guard catalyst can operate at elevated end-of-run temperatures, without overheating the hydrotreatment catalyst.

In Example 2-E at end of run, operation may be carried out without by-pass in line 116 and without splitting the recycle oil flow, such that all charge heater energy is directed to the hydrotreatment catalyst, and as a result all three catalysts operate at maximum end-of-run temperatures.

In this manner the use of a by-pass line, a split line and an extra heat exchanger provides a high flexibility in the heating scheme for the process, which without such a scheme would require operation with replacement of all catalyst following the shortest life time.

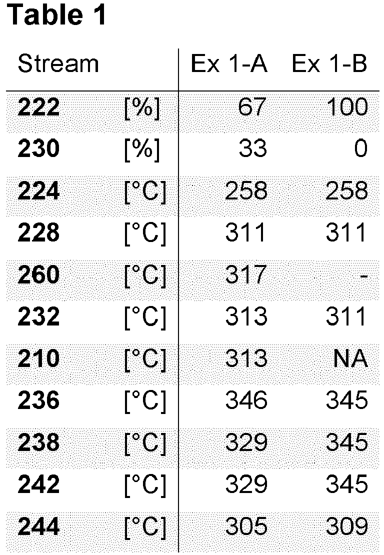

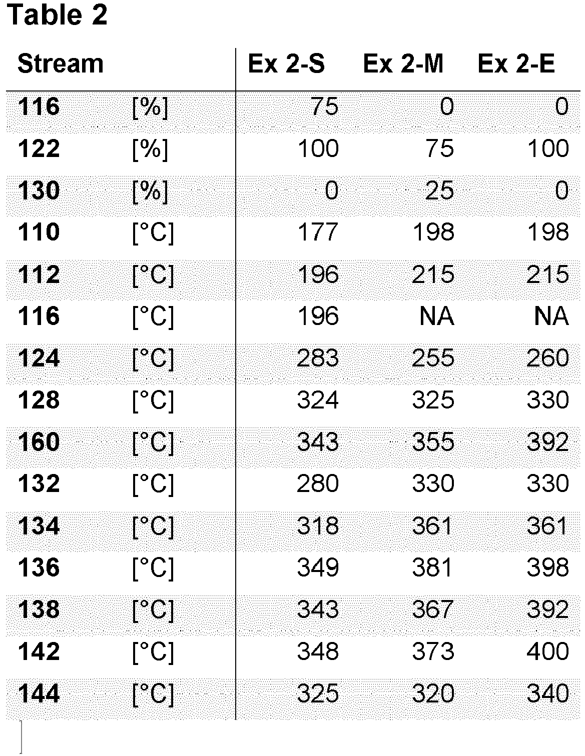

## Claims

1. A process for activating a first catalyst and a second catalyst by sulfidation, comprising the steps of
• directing a first amount of a sulfidation medium to a primary side of a first heat exchange, to provide a first amount of heated sulfidation medium having a first temperature,
• directing a second amount of sulfidation medium to a to a primary side of second heat exchange, to provide a second amount of heated sulfidation medium having a second temperature,
• combining said first heated sulfidation medium and said second heated sulfidation medium to contact a first material in a first reactor, and withdrawing an intermediate sulfidation medium from said first reactor,
• directing the intermediate sulfidation medium to be heated by a heat source providing an amount of heat, to provide a heated intermediate sulfidation medium,
• directing said heated intermediate sulfidation medium to a primary side of second heat exchange, to provide an adjusted heated intermediate sulfidation medium having a third temperature,
• directing said adjusted intermediate sulfidation medium to contact a second material in a second reactor, and withdrawing an effluent from said second reactor,
• directing the effluent by to a secondary side of said second heat exchange to provide a cooled effluent,
wherein the ratio between the first amount of heated sulfidation medium and second amount of heated sulfidation medium and the amount of heat provided by the second heat source are controllable.

2. A process according to claim 1 wherein said second heat source is from a fired heater, an electrical heater or a heat exchange with a process stream.

3. A process according to claim 1 or 2, wherein a recycled amount of said cooled effluent or a downstream stream originating from said cooled effluent is added to one or more of the sulfidation medium, the first amount of heated sulfidation medium and the second amount of heated sulfidation medium.

4. A process according to claim 1, 2 or 3, wherein a third amount of the sulfidation medium is combined with the first amount of heated sulfidation medium and the second amount of heated sulfidation medium.

5. A process according to claim 1, 2, 3 or 4 in which a third catalyst is present in a third reactor, and an amount of one of the sulfidation medium, the first amount of heated sulfidation medium, the second amount of heated sulfidation medium, the intermediate sulfidation medium, the heated intermediate sulfidation medium and the effluent is directed to contact said third material in said third reactor.

6. A process according to claim 1, 2, 3 or 4 in which a third catalyst is present in a third reactor and in which the third catalyst is pre-sulfided ex-situ and wherein less than 10%, such as none, of the sulfidation medium is directed to said third reactor during sulfidation.

7. A process for hydroprocessing a feedstock comprising the sulfidation process according to any claim above followed by a hydroprocessing process for hydroprocessing the feedstock carried out subsequently in the same process plant, wherein the temperature at the inlet of the first reactor is at least 50°C below the temperature at the inlet of the second reactor.

8. A process for hydroprocessing according to claim 7 as dependent on claim 4 or 5, wherein means of flow control are configured to allow a flow sequence of the reactors during sulfidation which if different from the flow sequence of the reactors during hydroprocessing.

9. A process for hydroprocessing according to any claim above where during hydroprocessing said first catalyst is operating under active guard conditions and where said second catalyst is operating under active hydroprocessing conditions and if present, said third catalyst is operating under active diolefin saturation conditions, and said feedstock comprises a renewable material comprising oxygenates and/or a product of thermal decomposition of a solid feedstock, such as plastic, municipal waste or biological materials.

10. A process for operating a first catalyst and a second catalyst, comprising the steps of
activating the catalysts by sulfidation by
directing a sulfidation medium to be heated by a first heat exchange, to provide a heated sulfidation medium having a sulfidation temperature,
directing said heated sulfidation medium in combination with a first recycle oil stream to contact a first material in a first reactor, and withdrawing an intermediate sulfidation medium from said first reactor,
directing the intermediate sulfidation medium to be heated by a second heat exchange, to provide a heated intermediate sulfidation medium,
directing said heated intermediate sulfidation medium to contact a second material in a second reactor, and withdrawing an effluent from said second reactor,
cooling the effluent by said first heat exchange to provide a cooled effluent,
directing at least an amount of said cooled effluent or a downstream stream originating from said cooled effluent as said first recycle oil stream and after activating the materials by sulfidation to be catalysts,
hydrotreating a feedstock by
directing said feedstock, optionally in combination with a first recycle oil stream, to contact said first catalyst in said first reactor at a first reactor inlet temperature to provide a pretreated product stream having a pretreated product temperature,
directing said pretreated product stream to be heated by said first heat exchange to provide a heated pretreated product stream,
directing said heated pretreated product stream to contact said second catalyst in said second reactor at a second reactor inlet temperature,
cooling the effluent of said second reactor by said first heat exchange, to provide a cooled effluent
directing at least an amount of said cooled effluent as said first recycle oil stream
**characterized in**, during hydrotreating, the second reactor inlet temperature being at least 30°C or 50°C above the first reactor inlet temperature.

11. A process for thermal control of a chemical process plant with two reaction steps comprising the following process steps:
a. providing a process feed stream, and splitting this stream in a first feed stream having the mass flow m1 and a second feed stream having the mass flow m2,
b. heat exchanging the first feed stream as primary stream in a first heat exchanger, to provide a first heat exchanged feed stream,
c. heating the second feed stream as primary stream in a second heat exchanger, to provide a second heat exchanged feed stream,
d. combining the first heat exchanged feed stream and the second heat exchanged feed stream and directing this combined heat exchanged feed stream to a first reactor, to provide at the outlet of this first reactor an intermediate process stream,
e. directing the intermediate process stream to a charge heat exchanger having a heat exchange duty, to provide a first heat exchanged intermediate process stream,
f. directing the first heat exchanged intermediate process stream as secondary stream to said first heat exchanger, to provide a second heat exchanged intermediate process stream,
g. directing the second heat exchanged intermediate process stream to a second reactor, to provide at the outlet of this second reactor an effluent stream,
h. directing the effluent stream as secondary stream to said second heat exchanger to provide a heat exchanged effluent stream,
i. wherein the ratio between mass flow m1 and mass flow m2 is controllable, and wherein the heat exchange duty of the charge heat exchanger is controllable.

12. A process where a further third feed stream having the mass flow m3 is split from said feed stream, and wherein the third feed stream is directed to the first reactor together with said the first heat exchanged feed stream and the second heat exchanged feed stream.

13. A process plant comprising
a feedstock inlet and a product outlet,
a first reactor comprising a catalyst and having an inlet and an outlet and
a second reactor comprising a catalyst and having an inlet and an outlet,
a first means of heat exchange having a cold side inlet, a cold side outlet, a hot side inlet and a hot side outlet,
a second means of heat exchange having a cold side inlet, a cold side outlet, a hot side inlet and a hot side outlet,
a means of heating having an inlet and an outlet,
a first means of flow control having one inlet and two independently controllable outlets, in fluid communication with the cold side inlets of the first means of heat exchange and the second means of heat exchange respectively,
wherein the feedstock inlet is in fluid communication with the inlet of means of flow control,
wherein the cold side outlet of the first means of heat exchange and the cold side outlet of the second means of heat exchange are in fluid communication with the inlet of the first reactor,
wherein the outlet of the first reactor is in fluid communication with the inlet of the means of heating,
the outlet of the means of heating is in fluid communication with the hot side inlet of the second means of heat exchange,
the hot side outlet of the second means of heat exchange, is in fluid communication with the inlet of the second reactor,
and the outlet of the second reactor is in fluid communication with the hot side inlet of the first means of heat exchange
and the hot side outlet of the first means of heat exchange is in fluid communication with the product outlet.

14. A process plant according to claim 13 wherein said means of flow control comprises a further third controllable outlet, in fluid communication with the inlet of said first reactor.

15. A process plant according to claim 13 or 14 further comprising a third reactor having an inlet and an outlet,
a second means of flow control, configurable for either configuration (a) providing fluid communication between the feedstock inlet and the inlet of the third reactor while providing fluid communication between the outlet of the third reactor and the inlet of the second means of flow control, or
configuration (b) for providing fluid communication between one of the outlet of the second reactor, the outlet of the means of heating and the hot side outlet of the second means of heat exchange and the inlet of the third reactor, while providing fluid communication between the outlet of the second reactor and the product outlet.]
